# EUROPEAN PATENT SPECIFICATION

(11) **EP 2 798 845 B1**
(45) Date of publication and mention of the grant of the patent: **14.08.2019**
(21) Application number: 13754476.3
(22) Date of filing: 13.02.2013
(51) Int. Cl.: H04N 19/895, H04N 19/172, H04N 19/107, H04N 19/164, H04N 19/58, H04N 19/187, H04N 19/33

(54) **DYNAMIC INSERTION OF SYNCHRONIZATION PREDICTED VIDEO FRAMES**
DYNAMISCHER EINSATZ VON SYNCHRONISATIONSPRÄDIZIERTEN VIDEOFRAMES
INSERTION DYNAMIQUE DE TRAMES VIDÉO PRÉDITES PAR SYNCHRONISATION

(30) Priority: 29.02.2012 US 201213407759
(43) Date of publication of application: 05.11.2014
(73) Proprietor: Microsoft Technology Licensing, LLC, Redmond, WA 98052 (US)
(72) Inventor: LU, Mei-Hsuan, Redmond, Washington 98052-6399 (US); LEE, Ming-Chieh, Redmond, Washington 98052-6399 (US)
(74) Representative: Driver, Virginia Rozanne
(86) International application number: PCT/US2013/025800
(87) International publication number: WO 2013/130263

(56) References cited:
- KR-A- 20110 079 579
- US-A1- 2005 105 812
- US-A1- 2006 233 239
- US-A1- 2006 251 191
- US-A1- 2009 213 938
- US-A1- 2010 061 225
- COTE G ET AL: "H.263+: VIDEO CODING AT LOW BIT RATES", IEEE TRANSACTIONS ON CIRCUITS AND SYSTEMS FOR VIDEO TECHNOLOGY, IEEE SERVICE CENTER, PISCATAWAY, NJ, US, vol. 8, no. 7, 1 November 1998 (1998-11-01), pages 849-866, XP000790131, ISSN: 1051-8215, DOI: 10.1109/76.735381
- FUKUNAGA S ET AL: "Error resilient video coding by dynamic replacing of reference pictures", GLOBAL TELECOMMUNICATIONS CONFERENCE, 1996. GLOBECOM '96. 'COMMUNICATI ONS: THE KEY TO GLOBAL PROSPERITY LONDON, UK 18-22 NOV. 1996, NEW YORK, NY, USA,IEEE, US, vol. 3, 18 November 1996 (1996-11-18), pages 1503-1508, XP010220270, DOI: 10.1109/GLOCOM.1996.591892 ISBN: 978-0-7803-3336-9
- TIANWU YANG ET AL: "An adaptive key-frame reference picture selection algorithm for video transmission via error prone networks", AUTONOMOUS DECENTRALIZED SYSTEMS, 2005. ISADS 2005. PROCEEDINGS CHENGDU, JIUZHAIGOU, CHINA APRIL 4-8, 2005, PISCATAWAY, NJ,IEEE, US, 4 April 2005 (2005-04-04), pages 367-371, XP010807499, DOI: 10.1109/ISADS.2005.1452089 ISBN: 978-0-7803-8963-2
- WIEGAND T ET AL: "Error-resilient video transmission using long-term memory motion-compensated prediction", IEEE JOURNAL ON SELECTED AREAS IN COMMUNICATIONS, IEEE SERVICE CENTER, PISCATAWAY, US, vol. 18, no. 6, 1 June 2000 (2000-06-01), pages 1050-1062, XP011450023, ISSN: 0733-8716, DOI: 10.1109/49.848255

## Description

### BACKGROUND

Predictive coding of video data can improve coding efficiency. However, predictive coding can cause "drift" when some video data is lost in transmission (such as by not arriving at all or arriving too late). "Drift" refers to the propagation of errors from missing data in subsequent frames. For example, when a first video frame (sometimes referred to as a picture) is lost, a second frame that follows the first frame may be coded using prediction that references that first frame. Accordingly, the decoding computer system may be unable to correctly decode that second frame. A third frame may be coded using prediction that references that second frame, and so forth. Indeed, the error from the lost frame (i.e., a frame where at least a portion of the data for the frame was lost) may get worse as subsequent frames are decoded, due to the reliance of the predictive coding on the lost frame. In a conferencing system, intra-coded frames may be inserted in the bitstream to combat this drift problem. For example, intra-coded frames may be periodically inserted in the bitstream. As another example, a coding computer system may dynamically insert an intra-coded frame when the encoding computer system is informed that data from the bitstream has been lost.

XP-000790131 discloses an encoder that uses a reference picture selection mode to select a reference picture for predicting frames in a video sequence. In this mode, a decoder transmits a NACK signal to the encoder, so as to indicate that there has been a degradation in picture quality. In response to receiving this signal, the encoder determines whether to use a different, unaffected reference picture for the prediction of future frames in the video sequence.

'Error Resilient Video Coding by Dynamic Replacing of Reference Pictures' by Fukunaga et al. discloses a "Dynamic Replacing of Reference Pictures by NACK (DRRN)" technique in which an encoder, in response to receiving a NACK signal, uses the last frame to be correctly received at the decoder to predict the next frame in a video sequence.

### SUMMARY

The disclosure relates to dynamically inserting synchronization predicted video frames. As used herein, dynamically inserted synchronization video frames are video frames that are inserted dynamically and avoid having predictions that rely on specified data, such as lost data. Because these dynamically inserted frames can be predictively coded with reference to previous frames, the frames may be more efficient than comparable intra-coded frames. However, the synchronization predicted video frames can allow for synchronization to cut off drift by avoiding predictions that reference lost data.

In one embodiment, the tools and techniques can include an encoding computer system encoding and sending a video bitstream over a computer network to a decoding computer system. The bitstream can follow a regular prediction structure when the encoding computer system is not notified of lost data from the bitstream, wherein each frame of the regular prediction structure comprises a base layer that includes a prediction that references a base layer of a previous frame and an enhancement layer that includes a prediction that references the base layer of that frame and the enhancement layer of a previous frame but does not reference the previous frame's base layer. The encoding computer system can receive a notification of lost data in the bitstream. The lost data can include at least a portion of a lost enhancement layer of a reference frame of the bitstream. Also, the encoding computer system can respond to the notification by dynamically encoding an anchor predicted frame comprising at least an enhancement layer of the dynamic anchor predicted frame with a prediction that references a base layer of the dynamic anchor predicted frame, and the base layer of the dynamic anchor predicted frame comprising a prediction that references the base layer of a previously-sent frame in the bitstream and that does not reference the lost enhancement layer. The encoding computer system can insert the anchor predicted frame in the bitstream in a position where the regular prediction structure would have dictated inserting a different predicted frame with a prediction that would have referenced the lost enhancement layer according to the regular prediction structure.

This Summary is provided to introduce a selection of concepts in a simplified form. The concepts are further described below in the Detailed Description. This Summary is not intended to identify key features or essential features of the claimed subject matter, nor is it intended to be used to limit the scope of the claimed subject matter. Similarly, the invention is not limited to implementations that address the particular techniques, tools, environments, disadvantages, or advantages discussed in the Background, the Detailed Description, or the attached drawings.

### BRIEF DESCRIPTION OF THE DRAWINGS

Fig. 1 is a block diagram of a suitable computing environment in which one or more of the described embodiments may be implemented.
Fig. 2 is a schematic diagram of a video transmission environment.
Fig. 3 is a schematic diagram of an example of a regular prediction structure with periodic key frames (top) and a corresponding prediction structure with dynamic key frames (bottom).
Fig. 4 is a schematic diagram of an example of a regular prediction structure without periodic key frames (top) and a corresponding prediction structure with dynamic long term predicted key frames (bottom).
Fig. 5 is a schematic diagram of an example of a regular prediction structure without predicted key frames (top) and a corresponding prediction structure with a dynamic anchor predicted frame (bottom).
Fig. 6 is a flowchart of a technique for dynamic insertion of synchronization predicted video frames.
Fig. 7 is a flowchart of another technique for dynamic insertion of synchronization predicted video frames.
Fig. 8 is a flowchart of yet another technique for dynamic insertion of synchronization predicted video frames.

### DETAILED DESCRIPTION

Embodiments described herein are directed to techniques and tools for improved encoding of video bitstreams when a coding computer system is informed that data from a bitstream has been lost. Such improvements may result from the use of various techniques and tools separately or in combination.

Such techniques and tools may include dynamically inserting different types of synchronization predicted video frames for different types of regular prediction structures. For example, in a bitstream with periodic key frames, which have predictions that are limited to referring to other key frames, a key frame can be dynamically inserted when a coding computer system is notified of lost data from the bitstream. As another example, in a bitstream without periodic key frames but that allows long term reference key frames, a long term reference key frame can be dynamically inserted when a coding computer system is notified of lost data from the bitstream. Long term reference key frames are key frames that are kept in an active frame window (the window of frames that are to be kept in a decoder frame buffer) for longer than regular frames. For example, a long term reference key frame may be kept in the active frame window until a coding computer system sends an explicit notification to remove that key frame from the active frame window. As another example, in a bitstream with a base layer and an enhancement layer, the base layer of a frame can be coded using prediction that references a previous frame's base layer but does not reference the previous frame's enhancement layer, and the enhancement layer of a frame can be coded using prediction that references a previous frame's enhancement layer but does not reference the previous frame's base layer. With this regular prediction structure, when a coding computing system is informed that data from a frame's enhancement layer has been lost but data from the frame's base layer has not been lost, the coding computing system can dynamically insert an anchor frame. As used herein, an anchor frame is a frame where the base layer is predictively coded with prediction that references a previous frame's base layer and an enhancement layer is intra-coded so that the enhancement layer only references other layers (e.g., the base layer) within the reference frame.

Accordingly, one or more benefits may be realized from the tools and techniques described herein. For example, the dynamic insertion of synchronization predicted video frames can allow for synchronization to cut off drift, while preserving some efficiency by using some predictive coding where the prediction references data from previous frames.

The subject matter defined in the appended claims is not necessarily limited to the benefits described herein. A particular implementation of the invention may provide all, some, or none of the benefits described herein. Although operations for the various techniques are described herein in a particular, sequential order for the sake of presentation, it should be understood that this manner of description encompasses rearrangements in the order of operations, unless a particular ordering is required. For example, operations described sequentially may in some cases be rearranged or performed concurrently. Moreover, for the sake of simplicity, flowcharts may not show the various ways in which particular techniques can be used in conjunction with other techniques.

Techniques described herein may be used with one or more of the systems described herein and/or with one or more other systems. For example, the various procedures described herein may be implemented with hardware or software, or a combination of both. For example, dedicated hardware implementations, such as application specific integrated circuits, programmable logic arrays and other hardware devices, can be constructed to implement at least a portion of one or more of the techniques described herein. Applications that may include the apparatus and systems of various embodiments can broadly include a variety of electronic and computer systems. Techniques may be implemented using two or more specific interconnected hardware modules or devices with related control and data signals that can be communicated between and through the modules, or as portions of an application-specific integrated circuit. Additionally, the techniques described herein may be implemented by software programs executable by a computer system. As an example, implementations can include distributed processing, component/object distributed processing, and parallel processing. Moreover, virtual computer system processing can be constructed to implement one or more of the techniques or functionality, as described herein.

### I. Exemplary Computing Environment

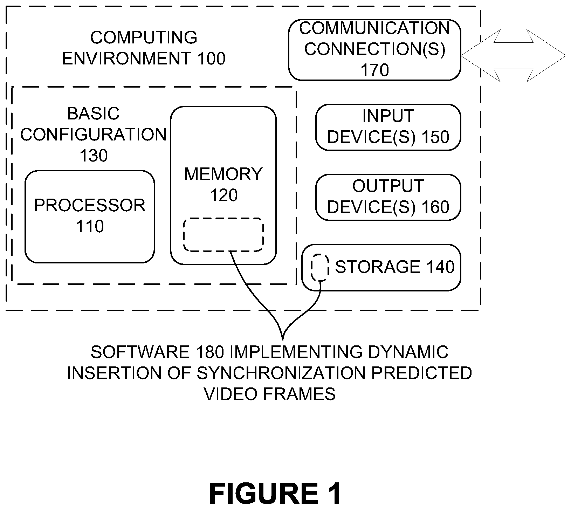

Fig. 1 illustrates a generalized example of a suitable computing environment (100) in which one or more of the described embodiments may be implemented. For example, one or more such computing environments can be used as a coding computer environment, a decoding computer environment, and/or a server that facilitates transmission of a video bitstream between the coding computer system and one or more decoding computer systems. Generally, various different general purpose or special purpose computing system configurations can be used. Examples of well-known computing system configurations that may be suitable for use with the tools and techniques described herein include, but are not limited to, server farms and server clusters, personal computers, server computers, hand-held or laptop devices, slate devices, multiprocessor systems, microprocessor-based systems, programmable consumer electronics, network PCs, minicomputers, mainframe computers, distributed computing environments that include any of the above systems or devices, and the like.

The computing environment (100) is not intended to suggest any limitation as to scope of use or functionality of the invention, as the present invention may be implemented in diverse general-purpose or special-purpose computing environments.

With reference to Fig. 1, the computing environment (100) includes at least one processing unit or processor (110) and memory (120). In Fig. 1, this most basic configuration (130) is included within a dashed line. The processing unit (110) executes computer-executable instructions and may be a real or a virtual processor. In a multiprocessing system, multiple processing units execute computer-executable instructions to increase processing power. The memory (120) may be volatile memory (e.g., registers, cache, RAM), non-volatile memory (e.g., ROM, EEPROM, flash memory), or some combination of the two. The memory (120) stores software (180) implementing dynamic insertion of synchronization predicted video frames.

Although the various blocks of Fig. 1 are shown with lines for the sake of clarity, in reality, delineating various components is not so clear and, metaphorically, the lines of Fig. 1 and the other figures discussed below would more accurately be grey and blurred. For example, one may consider a presentation component such as a display device to be an I/O component. Also, processors have memory. The inventors hereof recognize that such is the nature of the art and reiterate that the diagram of Fig. 1 is merely illustrative of an exemplary computing device that can be used in connection with one or more embodiments of the present invention. Distinction is not made between such categories as "workstation," "server," "laptop," "handheld device," etc., as all are contemplated within the scope of Fig. 1 and reference to "computer," "computing environment," or "computing device."

A computing environment (100) may have additional features. In Fig. 1, the computing environment (100) includes storage (140), one or more input devices (150), one or more output devices (160), and one or more communication connections (170). An interconnection mechanism (not shown) such as a bus, controller, or network interconnects the components of the computing environment (100). Typically, operating system software (not shown) provides an operating environment for other software executing in the computing environment (100), and coordinates activities of the components of the computing environment (100).

The storage (140) may be removable or non-removable, and may include computer-readable storage media such as magnetic disks, magnetic tapes or cassettes, CD-ROMs, CD-RWs, DVDs, or any other medium which can be used to store information and which can be accessed within the computing environment (100). The storage (140) stores instructions for the software (180).

The input device(s) (150) may be a touch input device such as a keyboard, mouse, pen, or trackball; a voice input device; a scanning device; a network adapter; a CD/DVD reader; or another device that provides input to the computing environment (100). The output device(s) (160) may be a display, printer, speaker, CD/DVD-writer, network adapter, or another device that provides output from the computing environment (100).

The communication connection(s) (170) enable communication over a communication medium to another computing entity. Thus, the computing environment (100) may operate in a networked environment using logical connections to one or more remote computing devices, such as a personal computer, a server, a router, a network PC, a peer device or another common network node. The communication medium conveys information such as data or computer-executable instructions or requests in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

The tools and techniques can be described in the general context of computer-readable media, which may be storage media or communication media. Computer-readable storage media are any available storage media that can be accessed within a computing environment, but the term computer-readable storage media does not refer to propagated signals per se. By way of example, and not limitation, with the computing environment (100), computer-readable storage media include memory (120), storage (140), and combinations of the above.

The tools and techniques can be described in the general context of computer-executable instructions, such as those included in program modules, being executed in a computing environment on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing environment. In a distributed computing environment, program modules may be located in both local and remote computer storage media.

For the sake of presentation, the detailed description uses terms like "determine," "choose," "adjust," and "operate" to describe computer operations in a computing environment. These and other similar terms are high-level abstractions for operations performed by a computer, and should not be confused with acts performed by a human being, unless performance of an act by a human being (such as a "user") is explicitly noted. The actual computer operations corresponding to these terms vary depending on the implementation.

### II. Dynamic Insertion of Synchronization Predicted Video Frames

### A. System and Environment

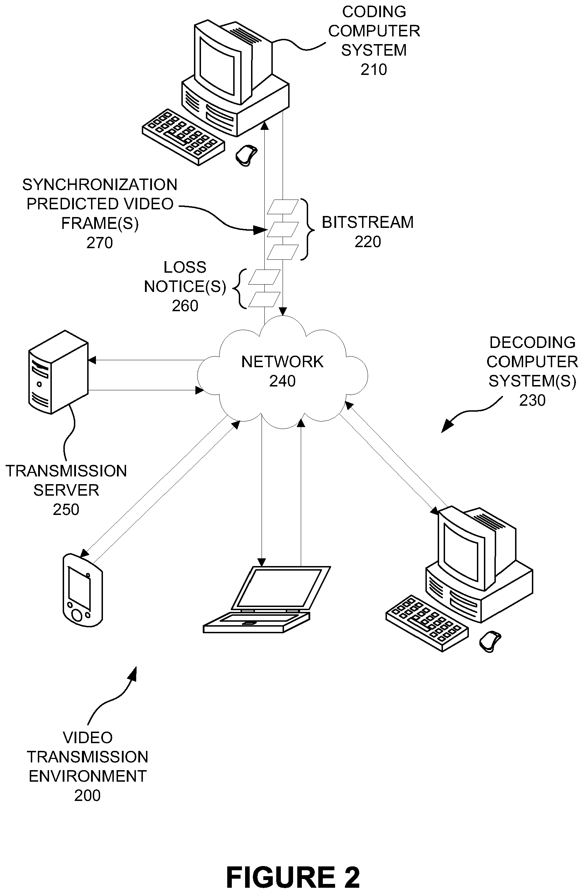

Fig. 2 is a schematic diagram of a video transmission environment (200) in conjunction with which one or more of the described embodiments may be implemented. The environment (200) can include a coding computer system (210). The coding computer system (210) can code video data according to a standard or protocol and transmit the video data in a bitstream (220) to one or more decoding computer systems (230). This can be done using any of various different coding standards and techniques. For example, a scalable video standard may be used. An example of such a scalable video coding standard is H.264 SVC (scalable video coding), as described in Recommendation ITU-T H.264 (06/2011), although the techniques described herein could be used with other standards. The bitstream (220) can be transmitted over a computer network (240), which may include a global computer network (e.g., the Internet) and/or one or more other networks (e.g., an extranet, local area network, wide area network, etc.). Also, the transmission may be aided by a transmission server (250). For example, the transmission server (250) may act as an intermediary between the coding computer system (210) and the decoding computer system(s) (230). Also, the decoding computer system(s) (210) may encode their own bitstreams and send them out to other computer systems such as the coding computer system (210), and the coding computer system (210) may receive and decode video bitstreams. In one example, the computer systems (210 and 230) may be participating in a real time audiovisual event, such as a videoconference, where video bitstreams transmitted between multiple computer systems.

It is possible that data in the bitstream (220) can be lost during transmission to the decoding computer system(s) (230). For example, the lost data may be delayed so that the data arrives at the decoding computer system(s) too late to be used, or the data may never arrive at the decoding computer system(s). Either way, the data can be considered to be lost. The decoding computer system(s) (230) and/or the transmission server (250) may send one or more loss notices (260) to the coding computer system (210) to identify the lost data (e.g., identifying which frames and/or frame layers included all or part of the lost data). The loss notices (260) may be sent in transmissions using the same protocol as the bitstream (220), or in one or more out-of-band communications. Upon receiving such a loss notice (260), the coding computer system (210) can code and insert in the bitstream (220) a synchronization predicted video frame (270) that is coded using prediction, but where the prediction does not directly or indirectly reference the data identified in the loss notice (260) (the prediction does not reference the data identified in the loss notice (260), does not reference data that itself references the data identified in the loss notice (260), etc.). Such a video frame (270) can be used to synchronize the decoding computer system(s) (230) with the coding computer system (210), which may have been out of synchronization due to the lost data.

Accordingly, the video frame (270) can cut off drift that may have occurred due to the lost data. The synchronization predicted video frame (270) may be the next frame after a frame that includes the lost data, or it may be some later frame. For example, the coding computer system (210) may not receive the loss notice (260) until the coding computer system (210) has already coded and sent one or more subsequent frames in the bitstream (220). For the intervening frames between the frame that includes the lost data and the synchronization predicted video frame (270), the decoding computer system (230) may take measures to avoid or decrease the adverse effects from the reliance on lost data, such as by dropping or concealing those intervening frames.

### B. Examples of Dynamic Insertion of Synchronization Predicted Video Frames

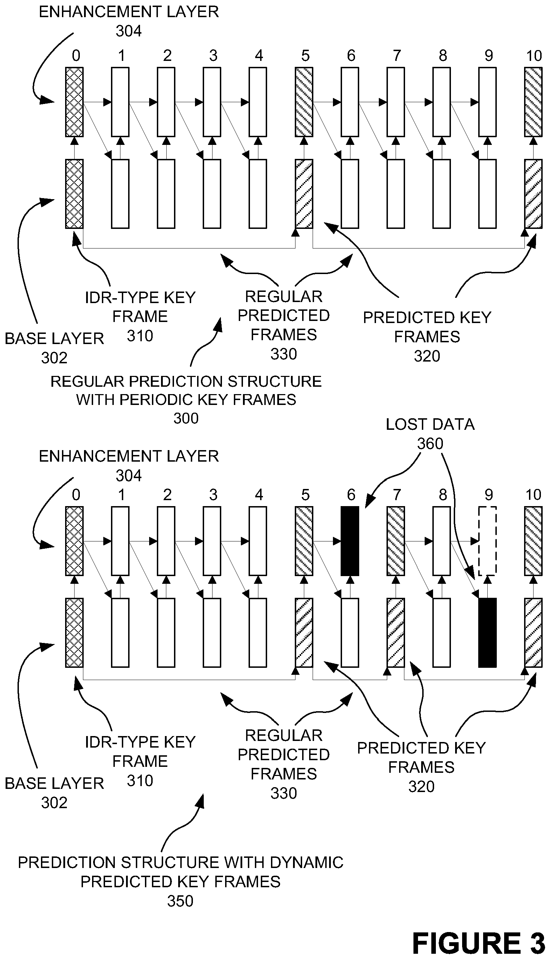

The coding computer system (210) may use different techniques and/or different types of inserted synchronization predicted video frames (270) to allow for synchronization. For scalable coded video such as H.264 SVC, performance may be improved by analyzing the location of the loss (such as by receiving a notice of data loss and a location (e.g., which frame and/or which layer) of the data loss) and inserting appropriate synchronization information based on the inter-layer dependency and predictive coding structure. In the following description, dynamic synchronization video frame insertion will be discussed with reference to some predictive coding structures from H.264 SVC as an example, although the tools and techniques can be applied to other standards as well. Some examples of such techniques and tools will now be discussed with reference to Figs. 3-5.

Referring now to Fig. 3, an example of a regular prediction structure (300) with periodic key frames is illustrated. Each frame can include a base layer (302) and an enhancement layer (304) (or multiple enhancement layers, not shown), with the predictions' references being illustrated with arrows between the layers in the same frame and different frames. The video can be scaled by adding or omitting enhancement layers from a frame. For example, an enhancement layer may add additional quality features (e.g., smaller quantization step size) and/or higher spatial resolution. For example, the prediction structure (300) may be a prediction structure for a H.264 medium grain scalability (MGS) bitstream with periodic key frames. The illustrated regular prediction structure (300) shows frames numbered 0 to 10 in sequential order, and a similar order is shown for frames in the other prediction structures of Figs. 3-5.

The regular prediction structure (300) can start with an instantaneous decoding refresh (IDR) type key frame (310) (frame 0), which is an intra-coded key frame. A key frame, as used herein, is a frame that is limited to having no inter-frame predictions or only having inter-frame predictions that reference other key frames. The IDR-type key frame (310) can have intra-frame prediction, with an enhancement layer (304) (such as a quality enhancement layer) being coded with a prediction that references (directly or indirectly) the base layer of that frame and possibly lower enhancement layers of that frame. Additionally, and IDR-type key frame (310) can signal that subsequent frames should not include prediction references to frames prior to the IDR-type key frame (310).

The IDR-type key frame (310) can be followed by regular predicted frames (330) (frames 1, 2, 3, 4, 6, 7, 8, and 9). The regular predicted frames (330) can each include a base layer (302) and an enhancement layer (304). Each base layer (302) of a regular predicted frame (330) can be coded with a prediction that references a highest enhancement layer of the previous frame. Each enhancement layer (304) of a regular predicted frame (330) can be coded with a prediction that also references the highest enhancement layer of the previous frame, and that references the base layer (302) and/or one or more lower enhancement layers of that same frame.

The regular prediction structure (300) of Fig. 3 can include periodic insertion of predicted key frames (320) (frames 5 and 10). Each predicted key frame (320) can include a prediction that references other key frames (320 and/or 310), but does not reference regular predicted frames. Accordingly, a predicted key frame (320) can allow for synchronization between the coding computer system and decoding computer system(s) as long as previous key frames have not been lost. Accordingly, additional protections against loss may be used for the predicted key frames (320), as compared to protections used for the regular predicted frames (330). If a key frame (310 or 320) is lost, then the coding computer system can insert an IDR-type key frame (320) upon being notified of that loss.

Referring still to Fig. 3, a prediction structure (350) with dynamic predicted key frames will be discussed. The prediction structure (350) can be the same as the regular prediction structure (300) discussed above, except when the coding computer system receives a notification of lost data (360), which is illustrated with the layers including lost data being blacked out in Figs. 3-5. In frame 6, the lost data (360) is in the enhancement layer (304), but the base layer (302) was not lost. The next regular predicted frame (330) (frame 7) would have had a prediction that referenced the lost enhancement layer (i.e., the enhancement layer with the lost data) if the regular prediction structure (300) were followed. However, the coding computer system can receive a notice of the lost data and can code and insert a predicted key frame (320) as frame 7. That predicted key frame (320) can include a prediction that references the previous key frame (frame 5), but that does not reference the regular predicted frame (330) with the lost data (360) (because predicted key frames (320) are limited to not referencing such regular predicted frames (330)). Accordingly, the predicted key frame (320) inserted as frame 7 can act as a synchronization predicted video frame to cut off drift that may have occurred from the lost data (360) in the enhancement layer (304) of frame 6.

Referring still to Fig. 3, in frame 9, there is lost data (360) in the base layer (302) of frame 9. Because data in the base layer (302) is lost, and the enhancement layer (304) of frame 9 includes prediction that references the base layer (302), the enhancement layer (304) cannot be correctly decoded (as is depicted by the dashed lines around the enhancement layer (304) of frame 9). Accordingly, subsequent frames with predictions referencing the enhancement layer (304) of frame 9 would not be able to be correctly decoded, resulting in drift in those subsequent frames. However, the coding computer system can receive a notification of the lost data (360) in frame 9, and can respond by coding and inserting a predicted key frame (320) as frame 10 in the bitstream, so that frame 10 can act as a synchronization predicted video frame, as with the predicted key frame (320) coded and inserted as frame 7. Because the predicted key frames (320) use some inter-frame prediction, they may be coded more efficiently than would intra-coded frames, such as IDR-type key frames, and they can still allow for synchronization and cutting off of drift from lost data.

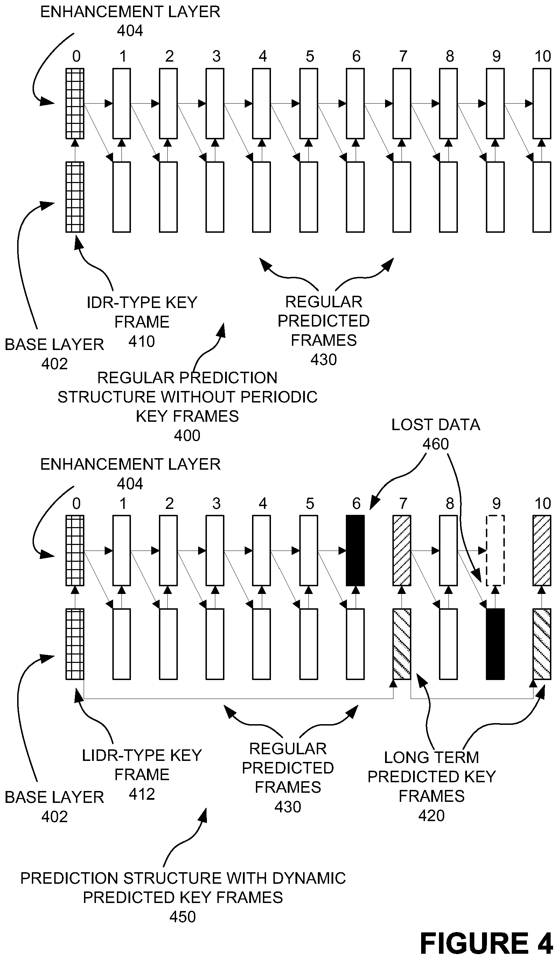

Referring now to Fig. 4, another example of the use of dynamic insertion of synchronization predicted video frames will be discussed. For example, this may be used with a medium grain scalability (MGS) structure according to the H.264 SVC standard. A regular prediction structure (400) without periodic key frames is illustrated at the top of Fig. 4. The regular prediction structure (400) can start with a regular IDR-type key frame (410) as shown, or alternatively with an LIDR-type key frame (412) (see the bottom of Fig. 4). The LIDR-type key frame (412) can be similar to the IDR-type key frame (410) discussed above, except that that the long-term frame can be kept in the active frame window longer than would be done with a frame that is not a long term frame (e.g., a regular IDR-type key frame). The IDR frame (410) can be followed by regular predicted frames (430), which can be the same as the regular predicted frames (330) discussed above. The frames (410 and 430) can each have a base layer (402) and one or more enhancement layers (404), as discussed above.

The bottom of Fig. 4 illustrates a prediction structure (450) with an LIDR-type key frame (412) at the beginning and later with dynamic predicted key frames. As illustrated, the enhancement layer (404) of frame 6 and the base layer (402) of frame 9 include lost data (460). In these cases, the coding computer system can respond to each notice of lost data by coding and inserting in the bitstream a long term predicted key frame (420). Such a frame can be kept longer than regular frames, as discussed above with reference to the LIDR-type key frame (412). Accordingly, the latest key frame can be retained in the decoding buffer, at least until another key frame is coded and sent. Also, the long term predicted key frames (420) can include prediction that can reference other key frames, but that is limited to not referencing regular predicted frames (430). Accordingly, each long-term predicted key frame (420) can act as a synchronization predicted frame to allow synchronization of the coding and decoding computer systems after data is lost, which can cut off resulting drift.

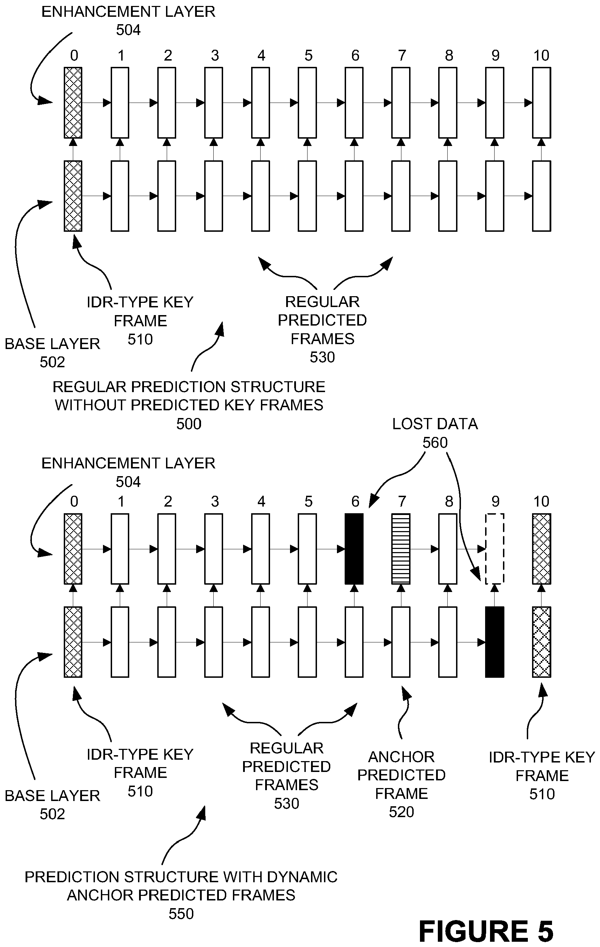

Referring now to Fig. 5, another example of the use of synchronization predicted video frames with a different prediction structure will be discussed. A regular prediction structure (500) without predicted key frames is illustrated at the top of Fig. 5. The regular prediction structure (500) can be similar to the regular prediction structure (400) discussed above. However, each regular predicted frame (530) can have a base layer (502) that includes a prediction that references a base layer (502) of a previous frame, rather than referencing an enhancement layer (504) of the previous frame. As an example, the regular prediction structure (500) may be structured according to a coarse grain scalable (CGS) bitstream or a spatial scalable bitstream under the H.264 SVC standard.

The bottom of Fig. 5 illustrates a prediction structure (550) with a dynamic anchor predicted frame. As illustrated in Fig. 5, the enhancement layer (504) of frame 6 and the base layer (502) of frame 9 include lost data (560). In response to receiving a notice of the lost data (560) in the enhancement layer (504) of frame 6, the coding computer system can code and insert an anchor predicted frame (520) as frame 7. The anchor predicted frame can include a base layer (502) with a prediction that references the base layer (502) of frame 6. The base layer (502) of the anchor predicted frame (520) can be coded as in the regular predicted frames (520), while the enhancement layer (504) of frame 7 can include a prediction that is limited to only including intra-frame references. Accordingly, the anchor predicted frame can include inter-frame prediction referencing the base layer (502) of the previous frame to improve coding efficiency, but can avoid inter-frame prediction referencing the enhancement layer (504) of frame 6 that includes lost data (560).

In response to receiving a notification of lost data (560) in the base layer (502) of frame 9, the coding computer system can code and insert an IDR-type key frame (510) as frame 10 to cut off drift from the lost data (560) in frame 9.

Note that combinations of the above types of synchronization predicted frames could be used. For example, combinations of anchor predicted frames (520) and long term predicted key frames (420) could be used to deal with losses in the same bitstream (e.g., in an H.264 CGS bitstream).

### III. Techniques for Dynamic Insertion of Synchronization Predicted Video Frames

Several techniques for dynamic insertion of synchronization predicted video frames will now be discussed. Each of these techniques can be performed in a computing environment. For example, each technique may be performed in a computer system that includes at least one processor and memory including instructions stored thereon that when executed by at least one processor cause at least one processor to perform the technique (memory stores instructions (e.g., object code), and when processor(s) execute(s) those instructions, processor(s) perform(s) the technique). Similarly, one or more computer-readable storage media may have computer-executable instructions embodied thereon that, when executed by at least one processor, cause at least one processor to perform the technique.

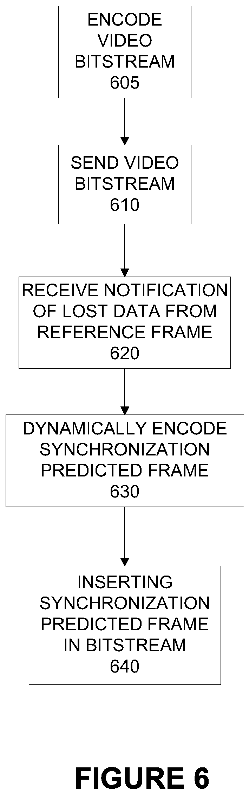

Referring to Fig. 6, a technique for dynamic insertion of synchronization predicted video frames will be described. The technique can include an encoding system encoding (605) and sending (610) a video bitstream over a computer network to a decoding computer system. The video bitstream can follow a regular prediction structure when the encoding computer system is not notified of lost data from the bitstream. The encoding computer system can receive (620) a notification of lost data in the bitstream. The lost data can include at least a portion of a reference frame of the bitstream. In response to the notification, the encoding computer system can dynamically encode (630) a synchronization predicted frame with a prediction that references one or more other previously-sent frames in the bitstream without referencing the lost data. The encoding computer system can insert (640) the synchronization predicted frame in the bitstream in a position where the regular prediction structure would have dictated inserting a different predicted frame with a prediction that would have referenced the lost data according to the regular prediction structure.

The synchronization predicted frame can include a predicted key frame whose prediction is limited to referencing one or more other key frames prior to the reference frame. The prediction of the predicted key frame can reference one or more intra-coded key frames (e.g. IDR frame(s)) and/or one or more predicted key frames.

The synchronization predicted frame can be a long term predicted key frame whose prediction is limited to referencing one or more other key frames prior to the lost data. The long term predicted key frame can reference one or more other long term key frames.

The different predicted frame that would have been coded and sent under the regular structure may have been a frame that would have referenced an enhancement layer of the reference frame. The synchronization predicted frame may be a key frame whose prediction references one or more key frames prior to the lost data. The lost data may include at least a portion of the enhancement layer of the reference frame and/or at least a portion of a base layer of the reference frame. The base layer can be referenced by prediction of the enhancement layer.

The lost data can include at least a portion of a lost enhancement layer, and the synchronization predicted frame can include an enhancement layer that references a base layer of the synchronization predicted frame. A prediction of the enhancement layer of the synchronization predicted frame can avoid referencing the lost enhancement layer. Additionally, an enhancement layer of the different predicted frame may have been a frame that would have referenced the enhancement layer with at least a portion of the lost data. A prediction of the base layer of the synchronization predicted frame may reference the base layer of a frame that includes at least a portion of the lost data.

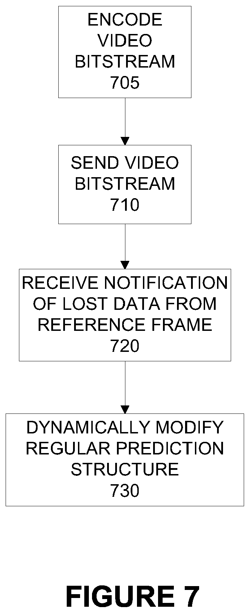

Referring now to Fig. 7, a technique for dynamic insertion of synchronization predicted video frames will be described. The technique can include encoding (705) and sending (710) a video bitstream over a computer network to a decoding computer system. The video bitstream can follow a regular prediction structure when the encoding system is not notified of lost data from the bitstream. A notification of lost data in the bitstream can be received (720), where the lost data can include at least a portion of a reference frame of the bitstream. In response to the notification, the regular prediction structure can be dynamically modified (730) by encoding and inserting in the bitstream a synchronization predicted frame having a prediction that does not reference the lost data.

Inserting the synchronization predicted frame can include inserting the synchronization predicted frame in the bitstream in a position where the regular prediction structure would have dictated inserting a different predicted frame with a prediction that would have referenced the lost data according to the regular prediction structure. The different frame can be a frame that would have referenced an enhancement layer of the reference frame. For example, the enhancement layer of the reference frame may be a quality enhancement layer or a spatial enhancement layer. The lost data may include at least a portion of the enhancement layer, and the prediction of the synchronization predicted frame may reference a base layer below the enhancement layer without referencing the enhancement layer. The synchronization predicted frame may include a key frame whose prediction references one or more key frames prior to the lost data in the bitstream.

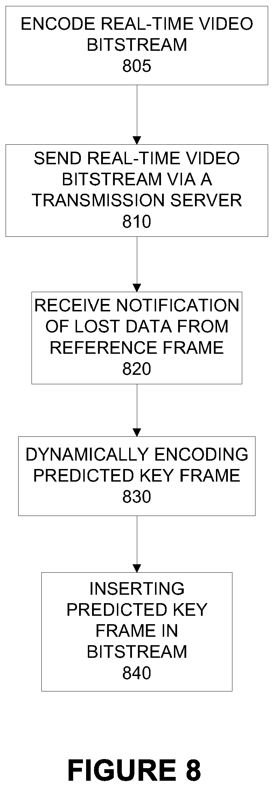

Referring now to Fig. 8, yet another technique for dynamic insertion of synchronization predicted video frames will be described. The technique can include an encoding computer system encoding (805) and sending (810) a real-time video bitstream over a computer network via a transmission server to a decoding computer system. The video bitstream can follow a regular prediction structure between frames when the encoding computer system is not notified of lost data from the bitstream. The encoding computer system can receive (820) a notification of lost data in the bitstream. The lost data can include at least a portion of a reference frame of the bitstream. In response to the notification, the encoding computer system can dynamically encode (830) a predicted key frame whose prediction references one or more other key frames in the bitstream that are prior to the reference frame and does not reference the reference frame. The predicted key frame can be inserted (840) in the bitstream in a position where the regular prediction structure would have dictated inserting a different predicted frame with a prediction that would have referenced the lost data according to the regular prediction structure.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method, comprising:
via an encoding computer system (210), encoding and sending a video bitstream over a computer network to a decoding computer system (230), the video bitstream following a regular prediction structure when the encoding computer system is not notified of lost data from the bitstream, wherein each frame (530) of the regular prediction structure comprises a base layer (502) that includes a prediction that references a base layer (502) of a previous frame (530) and an enhancement layer (504) that includes a prediction that references the base layer of that frame and the enhancement layer (504) of a previous frame (530) but does not reference the previous frame's base layer (502);
via the encoding computer system, receiving a notification of lost data (260) in the bitstream, the lost data (560) comprising data of a lost enhancement layer of a reference frame in the bitstream;
in response to the notification, via the encoding computer system, dynamically encoding a dynamic anchor predicted frame comprising at least an enhancement layer of the dynamic anchor predicted frame (520) with a prediction that references only a base layer of the dynamic anchor predicted frame (520), and the base layer of the dynamic anchor predicted frame (520) comprising a prediction that references the base layer of a previously-sent frame in the bitstream and that does not reference the lost data; and
via the encoding computer system, inserting the anchor predicted frame (520) in the bitstream in a position where the regular prediction structure would have dictated inserting a different predicted frame with a prediction that would have referenced the lost enhancement layer of the reference frame according to the regular prediction structure.

2. The method of claim 1, wherein the enhancement layer (504) of the anchor predicted frame (520) does not directly reference other frames in the bitstream.

3. The method of claim 1, wherein a prediction of the base layer (502) of the anchor predicted frame (520) references a base layer (502) of the reference frame that includes the lost enhancement layer.

4. The method of claim 3, wherein the base layer (502) of the anchor predicted frame (520) references the base layer (502) of the reference frame that includes the lost enhancement layer.

5. The method of claim 1, wherein the enhancement layer (504) of the anchor predicted frame (520) is a quality enhancement layer.

6. The method of claim 1, wherein the enhancement layer (504) of the anchor predicted frame (520) is a spatial enhancement layer.

7. The method of claim 1, wherein the inserting of the anchor predicted frame (520) comprises inserting the anchor predicted frame (520) after the reference frame that includes the lost enhancement layer in a frame order of the bit stream, with the bitstream frame order including the anchor predicted frame (520) and the reference frame that includes the lost enhancement layer.

8. A computer system comprising:
at least one processor (110); and
a memory (120) comprising instructions stored thereon that when executed by the at least one processor cause the at least one processor to perform acts comprising:
encoding and sending a video bitstream over a computer network (240) from an encoding computer system (210) to a decoding computer system (230), the video bitstream following a regular prediction structure when the encoding computer system (210) is not notified of lost data from the bitstream, wherein each frame (530) of the regular prediction structure comprises a base layer (502) that includes a prediction that references a base layer (502) of a previous frame (530) and an enhancement layer (504) that includes a prediction that references the base layer of that frame and the enhancement layer (504) of a previous frame (530) but does not reference the previous frame's base layer (502);
receiving a notification of lost data (260) in the bitstream, the lost data comprising at least a portion of a lost enhancement layer of the reference frame of the bitstream;
in response to the notification, dynamically encoding a dynamic anchor predicted frame comprising at least an enhancement layer of a dynamic anchor predicted frame (520) with a prediction that references a base layer of the dynamic anchor predicted frame (520), and the base layer of the dynamic anchor predicted frame (520) comprising a prediction that references the base layer of a previously-sent frame in the bitstream and that does not reference the lost enhancement layer; and
inserting the anchor predicted frame (520) in the bitstream in a position where the regular prediction structure would have dictated inserting a different predicted frame with a prediction that would have referenced the lost enhancement layer according to the regular prediction structure.

9. The computer system of claim 8, wherein the enhancement layer (504) of the anchor predicted frame (520) does not directly reference other frames in the bitstream.

10. The computer system of claim 8, wherein a prediction of the base layer (502) of the anchor predicted frame (520) references a base layer (502) of the reference frame that includes the lost enhancement layer.

11. The computer system of claim 10, wherein the base layer (502) of the anchor predicted frame (520) references the base layer (502) of the reference frame that includes the lost enhancement layer.

12. The computer system of claim 8, wherein the enhancement layer of the anchor predicted frame (520) is a quality enhancement layer.

13. The computer system of claim 8, wherein the enhancement layer of the anchor predicted frame (520) is a spatial enhancement layer.

14. The computer system of claim 8, wherein the inserting of the anchor predicted frame (520) comprises inserting the anchor predicted frame (520) after the reference frame that includes the lost enhancement layer in a frame order of the bit stream, with the bitstream frame order including the anchor predicted frame (520) and the reference frame that includes the lost enhancement layer.

15. One or more computer-readable storage media having computer-executable instructions embodied thereon that, when executed by at least one processor, cause at least one processor to perform the method steps according to any of claims 1 to 7.

## Patentansprüche

1. Computerimplementiertes Verfahren, umfassend:
mittels eines Codierungscomputersystems (210) Codieren und Senden eines Videobitstroms über ein Computernetzwerk an ein Decodierungscomputersystem (230), wobei der Videobitstrom einer regulären Vorhersagestruktur folgt, wenn das Codierungscomputersystem nicht über verlorene Daten aus dem Bitstrom benachrichtigt wird, wobei jeder Frame (530) der regulären Vorhersagestruktur eine Basisschicht (502), die eine Vorhersage beinhaltet, die eine Basisschicht (502) eines vorherigen Frames (530) referenziert, und eine Erweiterungsschicht (504), die eine Vorhersage beinhaltet, die die Basisschicht jenes Frames und die Erweiterungsschicht (504) eines vorherigen Frames (530) referenziert, jedoch nicht die Basisschicht (502) des vorherigen Frames referenziert, umfasst;
mittels des Codierungscomputersystems Empfangen einer Benachrichtigung über verlorene Daten (260) in dem Bitstrom, wobei die verlorenen Daten (560) Daten einer verlorenen Erweiterungsschicht eines Referenz-Frames in dem Bitstrom umfassen;
als Reaktion auf die Benachrichtigung mittels des Codierungscomputersystems dynamisches Codieren eines dynamischen vorhergesagten Anker-Frames, umfassend mindestens eine Erweiterungsschicht des dynamischen vorhergesagten Anker-Frames (520) mit einer Vorhersage, die nur eine Basisschicht des dynamischen vorhergesagten Anker-Frames (520) referenziert, und wobei die Basisschicht des dynamischen vorhergesagten Anker-Frames (520) eine Vorhersage umfasst, die die Basisschicht eines vorher gesendeten Frames in dem Bitstrom referenziert und nicht die verlorenen Daten referenziert; und
mittels des Codierungscomputersystems Einfügen des vorhergesagten Anker-Frames (520) in den Bitstrom in einer Position, an der die reguläre Vorhersagestruktur ein Einfügen eines anderen vorhergesagten Frames mit einer Vorhersage, die die verlorene Erweiterungsschicht des Referenz-Frames gemäß der regulären Vorhersagestruktur referenziert hätte, vorgeschrieben hätte.

2. Verfahren nach Anspruch 1, wobei die Erweiterungsschicht (504) des vorhergesagten Anker-Frames (520) andere Frames in dem Bitstrom nicht direkt referenziert.

3. Verfahren nach Anspruch 1, wobei eine Vorhersage der Basisschicht (502) des vorhergesagten Anker-Frames (520) eine Basisschicht (502) des Referenz-Frames referenziert, der die verlorene Erweiterungsschicht beinhaltet.

4. Verfahren nach Anspruch 3, wobei die Basisschicht (502) des vorhergesagten Anker-Frames (520) die Basisschicht (502) des Referenz-Frames referenziert, der die verlorene Erweiterungsschicht beinhaltet.

5. Verfahren nach Anspruch 1, wobei die Erweiterungsschicht (504) des vorhergesagten Anker-Frames (520) eine Qualitätserweiterungsschicht ist.

6. Verfahren nach Anspruch 1, wobei die Erweiterungsschicht (504) des vorhergesagten Anker-Frames (520) eine räumliche Erweiterungsschicht ist.

7. Verfahren nach Anspruch 1, wobei das Einfügen des vorhergesagten Anker-Frames (520) ein Einfügen des vorhergesagten Anker-Frames (520) hinter dem Referenz-Frame, der die verlorene Erweiterungsschicht beinhaltet, in einer Frame-Reihenfolge des Bitstroms umfasst, wobei die Bitstrom-Frame-Reihenfolge den vorhergesagten Anker-Frame (520) und den Referenz-Frame, der die verlorene Erweiterungsschicht beinhaltet, beinhaltet.

8. Computersystem, umfassend:
mindestens einen Prozessor (110) und
einen Speicher (120), der darauf gespeicherte Anweisungen umfasst, die bei Ausführung durch den mindestens einen Prozessor bewirken, dass der mindestens eine Prozessor Vorgänge durchführt, die Folgendes umfassen:
Codieren und Senden eines Videobitstroms über ein Computernetzwerk (240) von einem Codierungscomputersystem (210) an ein Decodierungscomputersystem (230), wobei der Videobitstrom einer regulären Vorhersagestruktur folgt, wenn das Codierungscomputersystem (210) nicht über verlorene Daten aus dem Bitstrom benachrichtigt wird, wobei jeder Frame (530) der regulären Vorhersagestruktur eine Basisschicht (502), die eine Vorhersage beinhaltet, die eine Basisschicht (502) eines vorherigen Frames (530) referenziert, und eine Erweiterungsschicht (504), die eine Vorhersage beinhaltet, die die Basisschicht jenes Frames und die Erweiterungsschicht (504) eines vorherigen Frames (530) referenziert, jedoch nicht die Basisschicht (502) des vorherigen Frames referenziert, umfasst;
Empfangen einer Benachrichtigung über verlorene Daten (260) in dem Bitstrom, wobei die verlorenen Daten zumindest einen Teil einer verlorenen Erweiterungsschicht des Referenz-Frames des Bitstroms umfassen;
als Reaktion auf die Benachrichtigung dynamisches Codieren eines dynamischen vorhergesagten Anker-Frames, umfassend mindestens eine Erweiterungsschicht eines dynamischen vorhergesagten Anker-Frames (520) mit einer Vorhersage, die eine Basisschicht des dynamischen vorhergesagten Anker-Frames (520) referenziert, und wobei die Basisschicht des dynamischen vorhergesagten Anker-Frames (520) eine Vorhersage umfasst, die die Basisschicht eines vorher gesendeten Frames in dem Bitstrom referenziert und nicht die verlorene Erweiterungsschicht referenziert; und
Einfügen des vorhergesagten Anker-Frames (520) in den Bitstrom in einer Position, an der die reguläre Vorhersagestruktur ein Einfügen eines anderen vorhergesagten Frames mit einer Vorhersage, die die verlorene Erweiterungsschicht des Referenz-Frames gemäß der regulären Vorhersagestruktur referenziert hätte, vorgeschrieben hätte.

9. Computersystem nach Anspruch 8, wobei die Erweiterungsschicht (504) des vorhergesagten Anker-Frames (520) andere Frames in dem Bitstrom nicht direkt referenziert.

10. Computersystem nach Anspruch 8, wobei eine Vorhersage der Basisschicht (502) des vorhergesagten Anker-Frames (520) eine Basisschicht (502) des Referenz-Frames referenziert, der die verlorene Erweiterungsschicht beinhaltet.

11. Computersystem nach Anspruch 10, wobei die Basisschicht (502) des vorhergesagten Anker-Frames (520) die Basisschicht (502) des Referenz-Frames referenziert, der die verlorene Erweiterungsschicht beinhaltet.

12. Computersystem nach Anspruch 8, wobei die Erweiterungsschicht des vorhergesagten Anker-Frames (520) eine Qualitätserweiterungsschicht ist.

13. Computersystem nach Anspruch 8, wobei die Erweiterungsschicht des vorhergesagten Anker-Frames (520) eine räumliche Erweiterungsschicht ist.

14. Computersystem nach Anspruch 8, wobei das Einfügen des vorhergesagten Anker-Frames (520) ein Einfügen des vorhergesagten Anker-Frames (520) hinter dem Referenz-Frame, der die verlorene Erweiterungsschicht beinhaltet, in einer Frame-Reihenfolge des Bitstroms umfasst, wobei die Bitstrom-Frame-Reihenfolge den vorhergesagten Anker-Frame (520) und den Referenz-Frame, der die verlorene Erweiterungsschicht beinhaltet, beinhaltet.

15. Ein oder mehrere computerlesbare Speichermedien mit darauf verkörperten computerausführbaren Anweisungen, die bei Ausführung durch mindestens einen Prozessor bewirken, dass mindestens ein Prozessor die Verfahrensschritte nach einem der Ansprüche 1 bis 7 durchführt.

## Revendications

1. Procédé mis en oeuvre par ordinateur, comprenant :
via un système de codage informatisé (210), le codage et l'envoi d'un flux binaire vidéo par l'intermédiaire d'un réseau informatique vers un système de décodage informatisé (230), le flux binaire vidéo suivant une structure de prévision régulière lorsque le système de codage informatisé n'a pas été notifié de données perdues à partir du flux binaire, dans lequel chaque trame (530) de la structure de prévision régulière comprend une couche de base (502) qui inclut une prévision qui fait référence à une couche de base (502) d'une trame antérieure (530) et une couche d'amélioration (504) qui inclut une prévision qui fait référence à la couche de base de cette trame et la couche d'amélioration (504) d'une trame antérieure (530) mais ne fait pas référence à la couche de base de la trame antérieure (502) ;
via le système de codage informatisé, la réception d'une notification de données perdues (260) dans le flux binaire, les données perdues (560) comprenant des données d'une couche d'amélioration perdue d'une trame de référence dans le flux binaire ;
en réaction à la notification, via le système de codage informatisé, le codage dynamique d'une trame prédite d'ancrage dynamique comprenant au moins une couche d'amélioration de la trame prédite d'ancrage dynamique (520) avec une prévision qui fait référence uniquement à une couche de base de la trame prédite d'ancrage dynamique (520), et la couche de base de la trame prédite d'ancrage dynamique (520) comprenant une prévision qui fait référence à la couche de base d'une trame envoyée antérieurement dans le flux binaire et qui ne fait pas référence aux données perdues ; et
via le système de codage informatisé, l'insertion d'une trame prédite d'ancrage (520) dans le flux binaire dans une position où la structure de prévision régulière aurait dicté l'insertion d'une trame prédite différente avec une prévision qui aurait fait référence à la couche d'amélioration perdue de la trame de référence en fonction de la structure de prévision régulière.

2. Procédé de la revendication 1, dans lequel la couche d'amélioration (504) de la trame prédite d'ancrage (520) ne fait pas directement référence à d'autres trames dans le flux binaire.

3. Procédé de la revendication 1, dans lequel une prévision de la couche de base (502) de la trame prédite d'ancrage (520) fait référence à une couche de base (502) de la trame de référence qui inclut la couche d'amélioration perdue.

4. Procédé de la revendication 3, dans lequel la couche de base (502) de la trame prédite d'ancrage (520) fait référence à la couche de base (502) de la trame de référence qui inclut la trame d'amélioration perdue.

5. Procédé de la revendication 1, dans lequel la couche d'amélioration (504) de la trame prédite d'ancrage (520) est une couche d'amélioration de la qualité.

6. Procédé de la revendication 1, dans lequel la couche d'amélioration (504) de la trame prédite d'ancrage (520) est une couche d'amélioration spatiale.

7. Procédé de la revendication 1, dans lequel l'insertion de la trame prédite d'ancrage (520) comprend l'insertion de la trame prédite d'ancrage (520) après la trame de référence qui inclut la couche d'amélioration perdue dans un ordre de trames du flux binaire, l'ordre de trames de flux binaire incluant la trame prédite d'ancrage (520) et la trame de référence qui inclut la couche d'amélioration perdue.

8. Système informatique comprenant :
au moins un processeur (110) ; et
une mémoire (120) comprenant des instructions stockées sur celle-ci qui, lorsqu'elles sont exécutées par l'au moins un processeur, obligent l'au moins un processeur à réaliser des actes comprenant :
le codage et l'envoi d'un flux binaire vidéo, par l'intermédiaire d'un réseau informatique (240) depuis un système de codage informatisé (210) jusqu'à un système de décodage informatisé (230), du flux binaire vidéo suivant une structure de prévision régulière lorsque le système de codage informatisé (210) n'a pas été notifié de données perdues à partir du flux binaire, dans lequel chaque trame (530) de la structure de prévision régulière comprend une couche de base (502) qui inclut une prévision qui fait référence à une couche de base (502) d'une trame antérieure (530) et une couche d'amélioration (504) qui inclut une prévision qui fait référence à la couche de base de cette trame et la couche d'amélioration (504) d'une trame antérieure (530) mais ne fait pas référence à la couche de base de la trame antérieure (502) ;
la réception d'une notification de données perdues (260) dans le flux binaire, les données perdues comprenant au moins une portion d'une couche d'amélioration perdue de la trame de référence du flux binaire ;
en réaction à la notification, le codage dynamique d'une trame prédite d'ancrage dynamique comprenant au moins une couche d'amélioration d'une trame prédite d'ancrage dynamique (520) avec une prévision qui fait référence à une couche de base de la trame prédite d'ancrage dynamique (520), et la couche de base de la trame prédite d'ancrage dynamique (520) comprenant une prévision qui fait référence à la couche de base d'une trame envoyée antérieurement dans le flux binaire et qui ne fait pas référence à la couche d'amélioration perdue ; et
l'insertion de la trame prédite d'ancrage (520) dans le flux binaire dans une position où la structure de prévision régulière aurait dicté l'insertion d'une trame prédite différente avec une prévision qui aurait fait référence à la couche d'amélioration perdue en fonction de la structure de prévision régulière.

9. Système informatique de la revendication 8, dans lequel la couche d'amélioration (504) de la trame prédite d'ancrage (520) ne fait pas directement référence à d'autres trames dans le flux binaire.

10. Système informatique de la revendication 8, dans lequel une prévision de la couche de base (502) de la trame prédite d'ancrage (520) fait référence à une couche de base (502) de la trame de référence qui inclut la couche d'amélioration perdue.

11. Système informatique de la revendication 10, dans lequel la couche de base (502) de la trame prédite d'ancrage (520) fait référence à la couche de base (502) de la trame de référence qui inclut la trame d'amélioration perdue.

12. Système informatique de la revendication 8, dans lequel la couche d'amélioration de la trame prédite d'ancrage (520) est une couche d'amélioration de la qualité.

13. Système informatique de la revendication 8, dans lequel la couche d'amélioration de la trame prédite d'ancrage (520) est une couche d'amélioration spatiale.

14. Système informatique de la revendication 8, dans lequel l'insertion de la trame prédite d'ancrage (520) comprend l'insertion de la trame prédite d'ancrage (520) après la trame de référence qui inclut la couche d'amélioration perdue dans un ordre de trames du flux binaire, l'ordre de trames de flux binaire incluant la trame prédite d'ancrage (520) et la trame de référence qui inclut la couche d'amélioration perdue.

15. Un ou plusieurs supports de stockage lisibles par ordinateur sur lesquels sont concrétisées des instructions exécutables par ordinateur qui, lorsqu'elles sont exécutées par au moins un processeur, obligent au moins un processeur à réaliser les étapes du procédé selon l'une quelconque des revendications 1 à 7.
